(19)

Europäisches Patentamt
European Patent Office
Office européen des brevets

(11)  EP 4 534 502 A1

(12)  EUROPEAN PATENT APPLICATION

(43) Date of publication:
09.04.2025  Bulletin 2025/15

(21) Application number: 23306696.8

(22) Date of filing: 03.10.2023

(51) International Patent Classification (IPC):
C04B 33/13 (2006.01)    C01B 33/32 (2006.01)

(52) Cooperative Patent Classification (CPC):
C04B 33/131; C04B 2235/3203; C04B 2235/3472

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ImerTech SAS
75015 Paris (FR)

(72) Inventor: Marcillou, Eric
31820 Pibrac (FR)

(74) Representative: Faure-Geors, Vanessa
ImerTech
43, quai de Grenelle
75015 Paris (FR)

(54)    MINERAL PRODUCT AND ITS USE IN CERAMIC PRECURSOR COMPOSITIONS

(57)    A new mineral product, ceramic precursor compositions comprising this new mineral product, and use of the new mineral product in a ceramic precursor composition.

Fig.4

**Description**

## TECHNICAL FIELD

The present disclosure concerns a new mineral product, a ceramic precursor composition comprising this new mineral product, and the use of the new mineral product in a ceramic precursor composition.

## BACKGROUND

Traditional sanitaryware products are typically produced by heating a ceramic precursor composition, for example comprising clays, feldspath and quartz, at a temperature of about 1250°C.

There is a need to reduce the firing temperature and/or the duration of the firing as it is important to reduce the energy consumption, and thus the $CO_2$ footprint, of the production of sanitaryware products.

There are some existing processes which disclose how to obtain sanitaryware products at a lower firing temperature.

However, these processes with a lower (minus 100°C for example) temperature do not disclose how to obtain a sanitaryware product having the required properties (water absorption index, pyroplasticity, shrinkage, modulus of rupture, thermal expansion), as they all damage at least one of the mentioned required properties, compared to a sanitaryware product obtained at a higher heating temperature, for example at 1250°C.

There is a need for a mineral, to be used in a ceramic precursor composition, which would allow to produce a sanitaryware product at a firing temperature of maximum 1200°C ; without damaging or even with improving the required properties of the sanitaryware product.

## SUMMARY

According to a first aspect, there is provided a lithium feldspar having a d50 of about 5 $\mu$m to about 35 $\mu$m, and comprising from about 0.5 wt.% to about 4.0 wt .% $Li_2O$, based on the total weight of the lithium feldspar.

The lithium feldspar may comprise from about 0.5 wt.% to about 3.0 wt .% $Li_2O$, based on the total weight of the lithium feldspar. Preferably, the lithium feldspar may comprise from about 0.8 wt.% to about 2.0 wt .% $Li_2O$, based on the total weight of the lithium feldspar.

The lithium feldspar may have a particle size distribution d95 of about 40 $\mu$m to about 80 $\mu$m.

The lithium feldspar may comprise $Na_2O$ and $K_2O$. Preferably, the lithium feldspar may comprise from about 3 wt.% to about 10 wt.% of the sum of $Na_2O$ and $K_2O$, based on the total weight of the lithium feldspar.

According to a second aspect, there is provided a ceramic precursor composition comprising :

ball clay ; kaolin ; and from about 10 to about 50 wt.% of a lithium feldspar according to the first aspect, based on the total dry weight of the ceramic precursor composition.

The ceramic precursor composition may comprise from about 15 to 45 wt.% of a lithium feldspar, based on the total dry weight of the ceramic precursor composition. Preferably the ceramic precursor composition may comprise from about 20 to 40 wt.% of a lithium feldspar, based on the total dry weight of the ceramic precursor composition.

The ceramic precursor composition may further comprise a non lithium feldspar. For example, the non lithium feldspar may include a sodium feldspar, a potassium feldspar, a sodium potassium feldspar, and any mixture thereof.

Additionally or alternatively, the ceramic precursor composition may further comprise a feldspathoid mineral, for example nepheline.

The ceramic precursor composition may comprise from about 0 to 30 wt.% of a non lithium feldspar, preferably from about 1 wt.% to about 25 wt.%, or from about 1 wt.% to about 20 wt.% of a non lithium feldspar, based on the total dry weight of the ceramic precursor composition.

The ceramic precursor composition may comprise from about 0 to 30 wt.% of a feldspathoid mineral, preferably from about 1 wt.% to about 25 wt.%, or from about 1 wt.% to about 20 wt.% of a feldspathoid mineral, based on the total dry weight of the ceramic precursor composition.

The ceramic precursor composition may comprise from about 10 to about 40 wt.% of ball clay, based on the total dry weight of the ceramic precursor composition.

The ceramic precursor composition may comprise from about 15 to about 45 wt.% of kaolin, based on the total dry weight of the ceramic precursor composition.

The ceramic precursor composition may comprise less than about 20 wt.% quartz, based on the total dry weight of the ceramic precursor composition.

Preferably, the ceramic precursor composition may comprise less than about 15 wt.% quartz, based on the total dry weight of the ceramic precursor composition.

The ceramic precursor composition may comprise less than 10 wt.% respirable crystalline silica, based on the total dry weight of the ceramic precursor composition. Preferably, the ceramic precursor composition may comprise less than 9 wt.%, or less than 8 wt.%, or less than 7 wt.%, or less than 6 wt.% respirable crystalline silica, based on the total dry weight of the ceramic precursor composition. Even more preferably the ceramic precursor composition may comprise less than 5 wt.% or less than 4 wt.% respirable crystaline silica, based on the total dry weight of the ceramic precursor composition.

The ceramic precursor composition may comprise $Na_2O$ and $K_2O$. Preferably, the ceramic precursor composition may comprise from about 4 wt.% to about 8 wt.% of the sum of $Na_2O$ and $K_2O$, based on the total dry weight of the ceramic precursor composition.

According to a third aspect, there is provided a method of preparing a ceramic article, comprising shaping and firing a ceramic precursor composition according to the second aspect.

The shaped ceramic precursor may be fired at a peak firing temperature of about 1050 °C to about 1200 °C.

According to a fourth aspect, there is provided a ceramic article obtainable by the method according to the third aspect, or made from the ceramic precursor composition of the second aspect.

The ceramic article may have one or more, or all, of the following properties:

- a water absorption index of less than 0.5% ;
- a pyroplasticity of less than 54 mm ;
- a shrinkage of less than 11% ;
- a modulus of rupture of at least 40 MPa as determined in accordance with ISO 10545-4:2016 ; and/or
- a thermal expansion at 500°C from about $53.10^{-7}.k^{-1}$ to about $63.10^{-7}.k^{-1}$.

The ceramic article may be in the form of a sanitary ware product. For example, the ceramic article maybe in the form of a faucet, a water closet, a bath tube or a shower item.

According to a fifth aspect, there is provided the use of a lithium feldspar having a d50 of about 5 $\mu$m to about 30 $\mu$m and comprising from 0.5 wt.% to 4.0 wt .% $Li_2O$ in a ceramic precursor composition, for example to lower the firing temperature of the ceramic precursor composition and/or the duration of the firing while improving or maintaining the water absorption index, shrinkage, thermal expansion, pyroplasticity and modulus of rupture of the obtained ceramic article in comparison to the same precursor ceramic composition not comprising the lithium feldspar.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

## FIGURES

Embodiments will now be described by way of example only, with reference to the Figures, in which:

Figure 1 is a plot of an examplified firing cycle.

Figure 2a is a picture of a sample placed in a kiln before firing, for measuring the pyroplasticity.

Figure 2b is a picture of a sample placed in a kiln after firing, for measuring the pyroplasticity.

Figure 3 is a picture showing how the pyroplasticity is measured.

Figure 4 is a plot of the properties measured for a ceramic article made from a ceramic precursor composition comprising the lithium feldspar at different d50.

Figure 5 is a plot of the properties measured for a ceramic article made from a ceramic precursor composition comprising different amounts of the lithium feldspar.

## DETAILED DESCRIPTION

It has surprisingly been found that a new lithium feldspar, having a d50 of about 5 $\mu$m to about 35 $\mu$m, and comprising from about 0.5 wt.% to about 4.0 wt .% $Li_2O$, based on the total weight of the lithium feldspar, when used in a ceramic precursor composition, allows to obtain a ceramic article at a lower peak temperature and/or a shorter duration of the firing, i.e. at a lower carbon footprint and at a lower cost. It has also surprisingly been found that the obtained ceramic article has equivalent or improved properties such as water absorption index, pyroplasticity, shrinkage, modulus of rupture, thermal expansion, when compared with a similar ceramic article not produced from a precursor composition comprising the lithium feldspar of the invention.

*Lithium feldspar*

As used herein, the term "lithium feldspar" is used in its art-recognized sense, and refers to feldspatic mineral assemblage that are rich in lithium, i.e. which comprise lithium at greater than impurity levels, for example, wherein the feldspar comprises at least about 0.5 wt.% $Li_2O$, based on the total weight of the lithium feldspar.

The lithium feldspar may comprise albite, anorthite, microcline, and/or orthoclase, and optionally may additionally comprise lepidolite, muscovite, topaz, kaolinite and/or quartz.

The lithium feldspar may comprise at least 30 wt.% of albite, anorthite, microcline, and/or orthoclase, based on the total weight of the lithium feldspar.

The mineral composition of the lithium feldspar may be determined using semi-quantitative powder X-ray diffraction (XRD). The XRD measurements may be obtained by the following method. A sample of the concentrate is milled A lump-free powder is generated and inserted into an XRD sample holder by back filling, using a suitable method to ensure that preferential orientation is avoided. The sample is scanned on the XRD (either a Malvern Panalytical X'Pert PRO or a D8 Advance A25 Bruker with Bragg-Brentano Geometry and K430 X-ray generator) at 40 mA and 40 eV between $2\theta = 5°$ and $2\theta = 60°$ using a step size of 0.02° and 10 seconds per step. The scan is viewed on the XRD analysis software HighScore Plus (available from Malvern Panalytical) or DIFFRAC.EVA (available from Bruker) and XRD peaks are assigned according to the PDF-2 minerals database (available from the International Centre for Diffraction Data). XRD peak information is also available from public databases (such as the Mineralogy Database at http://webmineral.com). The amount of each mineral in the sample is determined using DIFFRACT TOPAS software. This software allows to perform semi quantification via Rietveld method.

The chemical composition of the lithium feldspar may be determined using both Energy Dispersive X-Ray Fluorescence (EDXRF) and Inductively coupled plasma optical emission (ICP OES) for the lithium Li.

The lithium feldspar may comprise (e.g. as measured by ICP OES) from about 0.5 wt.% to about 4.0 wt.%, for example, from about 0.5 wt.% to about 3.0 wt .% $Li_2O$, or from about 0.5 wt.% to about 2.0 wt.% $Li_2O$, based on the total weight of the lithium feldspar.

The lithium feldspar may comprise (e.g. as measured by EDXRF) from about 57 wt. % to about 90 wt. %, for example, from about 60 wt. % to about 80 wt. % $SiO_2$, based on the total weight of the lithium feldspar.

The lithium feldspar may comprise (e.g. as measured by EDXRF) from about 10 wt. % to about 30 wt. %, for example, from about 15 wt. % to about 20 wt. %, $Al_2O_3$, based on the total weight of the lithium feldspar.

The lithium feldspar may comprise (e.g. as measured by EDXRF) from about 0.01 wt. % to about 0.5 wt. %, for example, from about 0.1 wt. % to about 0.4 wt. %,or from about 0.2 wt. % to about 0.3 wt. %, $Fe_2O_3$, based on the total weight of the lithium feldspar.

The lithium feldspar may comprise (e.g. as measured by EDXRF) from about 0.1 wt. % to about 0.5 wt. %, for example, from about 0.2 wt. % to about 0.4 wt. %, CaO, based on the total weight of the lithium feldspar.

The lithium feldspar may comprise (e.g. as measured by EDXRF) from about 1.0 wt. % to about 5.0 wt. %, for example, from about 2.0 wt. % to about 5.0 wt. %, or from about 3.0 wt. % to about 4.0 wt. %, $Na_2O$, based on the total weight of the lithium feldspar.

The lithium feldspar may comprise (e.g. as measured by EDXRF) from about 1.0 wt. % to about 5.0 wt. %, for example, from about 2.0 wt. % to about 5.0 wt. %, or from about 3.0 wt. % to about 4.0 wt. %, $K_2O$, based on the total weight of the lithium feldspar.

The lithium feldspar may comprise (e.g. as measured by EDXRF) from about 3.0 wt. % to about 10.0 wt. % of the sum of $Na_2O$ and $K_2O$, for example from about 6.0 wt. % to about 8.5 wt. % of the sum of $Na_2O$ and $K_2O$ based on the total weight of the lithium feldspar.

The lithium feldspar may comprise (e.g. as measured by EDXRF) no more than about 1.0 wt. %, for example, no more than about 0.1 wt. % $TiO_2$, based on the total weight of the lithium feldspar.

Particle size properties are measured by wet Malvern laser scattering (standard ISO 13320-1 :2020). In this technique, the size of particles in powders, suspensions and emulsions may be measured using the diffraction of a laser beam, based on the application of Fraunhofer theory. Such a machine, for example a Laser Master Sizer 3000 (as supplied by Malvern instruments), provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value. The $d_{99}$, $d_{95}$, $d_{90}$, $d_{75}$, $d_{25}$ and the $d_{10}$ are the values determined in this way of the particle e.s.d. at which there are 99%, 95%, 90%, 75%, 25% and 10% respectively by volume of the particles which have an equivalent spherical diameter less than that $d_{99}$, $d_{95}$, $d_{90}$, $d_{75}$, $d_{25}$ or $d_{10}$ value. For the avoidance of doubt, the measurement of particle size using laser light scattering is not an equivalent method to a sedimentation measurement method.

The lithium feldspar may have a d50, as measured by laser scattering, of about 5 μm to about 35 μm, for example, of about 10 μm to about 35 μm, or of about 15 μm to about 30 μm.

The lithium feldspar may have a d95, as measured by laser scattering, of from about 40 μm to about 80 μm, for example, of from about 50 μm to about 80 μm, or from about 60 μm to about 80 μm.

*Ceramic precursor composition*

As used herein, the term "ceramic precursor composition" means a composition, in a dry or in a slurry form, which, after at least the steps of shaping and firing, is able to produce a ceramic article.

The term « ball clay » means a group of clays comprising of 20 wt.% to 80 wt.% kaolinite, 10 wt. % to 30 wt.% mica, 6 wt.% to 65 wt.% quartz and a variety of other minerals such as smectite and carbonaceous materials (such as lignite) in smaller ratios.

The term "ball clay" as used herein encompasses any plastic clay and, in particular, is not limited in terms of the geographical location of the source of the clay.

The term « kaolin » means a mineral comprising at least 80.1 wt.% kaolinite.

The ceramic precursor composition comprises from about 15 wt.% to about 50 wt.% of lithium feldspar, based on the total dry weight of the ceramic precursor composition.

The ceramic precursor composition may comprise from about 20 wt.% to about 50 wt.% of lithium feldspar, for example from about 25 wt.% to 45 wt.% of lithium feldspar, based on the total dry weight of the ceramic precursor composition.

The ceramic precursor composition may comprise from about 10 to about 40 wt.% of ball clay, for example from about 15 to about 35 wt.% of ball clay, based on the total dry weight of the ceramic precursor composition.

The ceramic precursor composition may comprise from about 10 to about 40 wt.% of kaolin, for example from about 15 to about 35 wt.%, based on the total dry weight of the ceramic precursor composition.

The ceramic precursor composition may comprise from about 20 wt.% to about 50 wt.% of lithium feldspar, from about 10 to about 40 wt.% of ball clay, and from about 10 to about 40 wt.% of kaolin, based on the total dry weight of the ceramic precursor composition. For example, the ceramic precursor composition may comprise from about 25 wt.% to about 45 wt.% of lithium feldspar, from about 15 to about 35 wt.% of ball clay, and from about 15 to about 35 wt.% of kaolin, based on the total dry weight of the ceramic precursor composition.

The ceramic precursor composition may further comprise a non lithium feldspar. By non lithium feldspar, is meant a feldspar comprising less than 0.1 wt.% LizO, for example less than 0.05 wt.% $Li_2O$, based on the total weight of the non lithium feldspar.

The non lithium feldspar may comprise a sodium feldspar, a potassium feldspar, a sodium potassium feldspar, and any mixture thereof.

Preferably, the non lithium feldspar may comprise sodium feldspar.

Additionaly or alternatively, the ceramic precursor composition may further comprise a feldspathoid mineral, for example may further comprise nepheline.

By feldspathoid mineral, is meant a mineral comprising aluminosilicate of sodium, potassium, and/or calcium and comprising less than 56 wt.% $SiO_2$.

The ceramic precursor composition may comprise less than about 20 wt.% quartz (as measured by XRD), based on the total dry weight of the ceramic precursor composition.

Preferably the ceramic precursor composition may comprise less than about 15 wt.% quartz, preferably less than about 10 wt.% quartz, based on the total dry weight of the ceramic precursor composition. For example, the ceramic precursor composition may comprise from about 2 wt.% to about 15 wt.% quartz, preferably from about 2 wt.% to about 10 wt.% quartz, based on the total dry weight of the ceramic precursor composition.

The ceramic precursor composition may comprise less than 15 wt.% respirable crystalline silica, based on the total dry weight of the ceramic precursor composition.

Preferably, the ceramic precursor composition may comprise less than 10 wt.% respirable crystalline silica, based on the total dry weight of the ceramic precursor composition.

By respirable crystalline silica is meant is a fine respirable dust form of silica, also known as silica dust.

The respirable crystalline silica is measured according to the Standard NF EN 481:1993.

The ceramic precursor composition may be dry. Alternatively, the ceramic precursor composition may be a slurry. The ceramic precursor composition may comprise from about 15 wt.% to about 35 wt.% water, preferably from about 20 wt.% to about 30 wt.% water, based on the total weight of the ceramic composition.

The ceramic precursor composition may comprise $Na_2O$ and $K_2O$. For example, the ceramic precursor composition may comprise from about 4 to about 8 wt.% of the sum of $Na_2O$ and $K_2O$, or from about 5 to about 7 wt.% of the sum of $Na_2O$ and $K_2O$, based on the total dry weight of the ceramic precursor composition.

*Method of making a ceramic*

As used herein, the term "shaping" means any typical way of preparing a precursor ceramic composition to obtain the required shape. For example, shaping may include molding.

As used herein, the term "firing" means any typical way of heating the ceramic precursor composition so that to obtain a ceramic article from a ceramic precursor composition.

The ceramic precursor composition may be shaped, for example, in any suitable mold, like a plaster mold.

The shaped ceramic precursor composition may be dried, for example, by any suitable process. The composition may be dried in a dryer, for example at a temperature from 40 to 100°C. Alternatively the composition may be dried at room temperature.

The shaped ceramic composition may be dried up to a 2 wt.% water content, preferably up to a 1 wt.% water content. Therefore the shaped ceramic composition may have a 2 wt.% water content, preferably a 1 wt.% water content.

Optionally, the shaped ceramic precursor composition may be coated by a glaze composition. For example, the glaze composition may comprise silica, feldspar, kaolin, and/or frit.

The shaped ceramic precursor composition may be fired on any suitable device, for example any suitable kiln furniture.

The shaped ceramic composition may be fired as described below.

The shaped ceramic composition may be fired at a peak firing temperature of about 1050 °C to about 1200 °C. Preferably, the shaped ceramic composition may be fired at a peak firing temperature of about 1100 °C to about 1180 °C, or from about 1110 °C to about 1170 °C.

The shaped ceramic composition may be fired at a peak firing temperature between about 10 to about 120 minutes, preferably between about 30 minutes and about 60 minutes.

The peak firing temperature may be measured by a Buller ring and corresponds to the maximum temperature at which the shaped ceramic composition is fired within the kiln.

The shaped ceramic composition may be fired in any suitable kiln, for example a tunnel kiln, or a shuttle kiln.

The shaped ceramic composition may be fired under an ambient atmosphere.

The shaped ceramic composition may be introduced at room temperature (i.e. 25°C) in the kiln, and the kiln is progressively heated up to the peak firing temperature.

The shaped ceramic composition may be fired at a temperature between 900°C and the peak firing temperature, at an average heating rate of from 0.2 °C/min to 1°C/min, preferably at an average heating rate of about 0.5°C/min.

*Ceramic article*

By ceramic article is meant a ceramic product which has been fired from a ceramic precursor composition. The ceramic article can be coated by a glaze or may not be coated by a glaze.

The ceramic article may be made, or is obtainable, from the ceramic precursor composition of the invention.

The ceramic article may be made, or is obtainable, by the method of making a ceramic on the invention.

The ceramic article may have a water absorption index of less than about 0.5%, preferably, of from about 0.01% to about 0.5%, or from about 0.1 to about 0.3%.

The ceramic article may have a pyroplasticity of less than about 54 mm, preferably less than about 50 mm.

The ceramic article may have a shrinkage of less than about 11%, preferably less than about 10%.

The ceramic article may have a modulus of rupture of at least about 35 MPa, preferably of at least 40 MPa.

The ceramic article may have a thermal expansion at 500°C from about $53.10^{-7}.k^{-1}$ to about $63.10^{-7}.k^{-1}$, preferably of about $57.10^{-7}.k^{-1}$.

The following measurement methods may be used.

*Modulus of rupture*

The bending strength test is performed by the three-point bending method, on a ZwickRoell Z030 universal testing machine. The experimental span is set to 50-mm, the deformation speed is 0.5mm/s and the sample size of the ceramic sample bars is 120mm*12mm*8mm.

The modulus of rupture was calculated as the average of 4 measured values

$$R = \frac{3}{2} \times \frac{F \times I}{b \times h^2} \quad (1)$$

wherein

F is the breaking load (in N),
I is the span (in mm) between the support rollers,
b is the width of the ceramic sample bar (in mm)
h is the thickness of the ceramic sample bar (in mm)

*Water absorption index*

Water absorption index Wa (in %) was determined using Archimedes principle.
After vacuum impregnation of the samples, water absorption of the ceramic articles have been determined by the following equation (2)

$$Wa(\%) \ = \ \frac{Wc - Wb}{Wb} \times 100\,\% \ (2)$$

$W_B$ and $W_c$ are respectively the mass of dry and water-saturated samples in the air.

*Thermal expansion*

The thermal expansion and the corresponding coefficient of thermal expansion (CTE) were measured on green test bars (shaped and dried, not fired), on a sample of 20mm*4mm*4mm, using a dilatometer (Netzsch DIL), heating up 5°C/min).
The expansion coefficient ((CTE) is calculated according to the following equation (3) from 50°C to 500°C and is expressed in $.k^{-1}$.

$$CTE \ = \ \frac{\Delta L}{Lo \times \Delta T} \ (3)$$

wherein $\Delta L$, $L_0$ and $\Delta T$ are respectively the linear expansion, the initial length of the sample, and the specified temperature interval.

*Shrinkage*

The measurement is performed on samples of dimension 100 mm*12mm*8mm with a callipser (Mitutyo).
The shrinkage (total shrinkage, $R_{total}$) is measured and calculated by the following equation (4)

$$R_{Total} \ = \frac{L0 - Lc}{L0} \, X100$$

(4)

wherein

L0 is the length (in mm) of the sample after demolding and before drying and firing
Lc is the length (in mm) of the sample after firing

*Pyroplasticity*

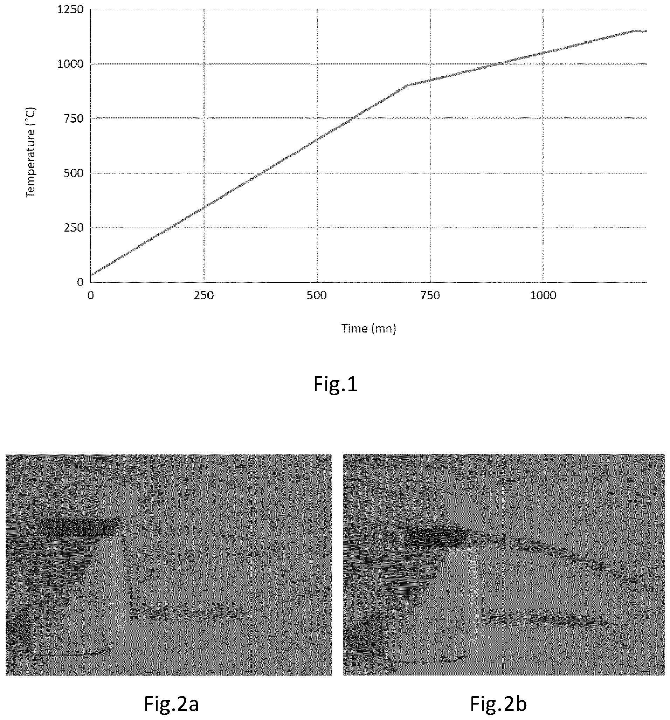

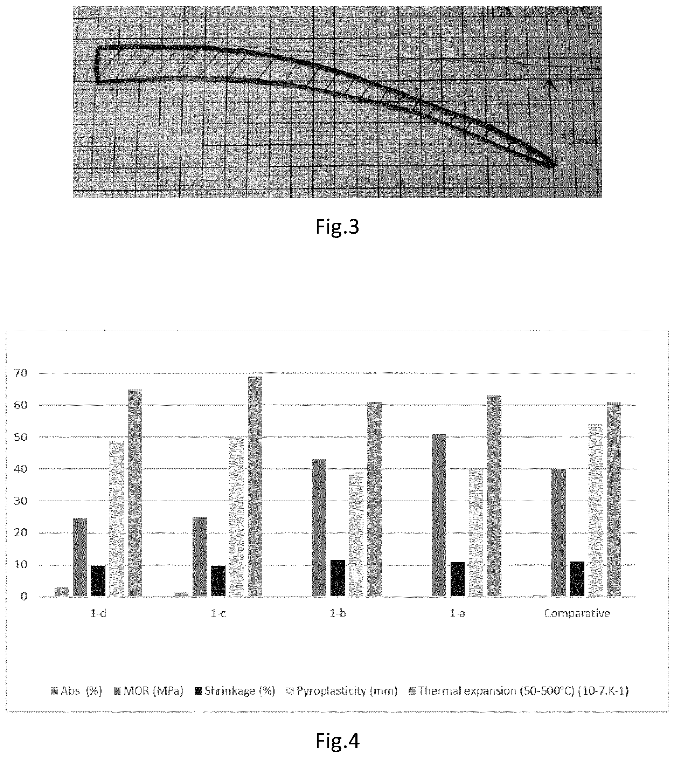

To determine the pyroplastic deformation behavior of compositions, the compositions were shaped using the casting method as described before in a plaster mold. The samples were positioned in the kiln according to Figure 2a.
They are then fired at a heating rate of 42°C/min from 30°C to 1150°C, which is the peak temperature.
The pyroplasticity is measured as the deformation of the sample after firing (in mm), as shown in Figure 2b and Figure 3.
The ceramic article may be in the form of a sanitary ware product, for example, a faucet, a water closet, a bath tube or a shower item.

*Use of the lithium feldspar*

The invention extends to the use of a lithium feldspar having a d50 of about 5 μm to about 30 μm and comprising from 0.5 wt.% to 4.0 wt .% $Li_2O$, based on the total weight of the lithium feldspar in a ceramic precursor composition, for example to lower the firing temperature of the ceramic precursor composition and/or the duration of the firing while improving or maintaining the water absorption index, shrinkage, thermal expansion, pyroplasticity and modulus of rupture of the obtained ceramic article in comparison to the same precursor ceramic composition not comprising the lithium feldspar.

*Modifications and combinations*

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and subcombinations of one or more features described herein.

**EXAMPLES**

*Example 1*

Lithium feldspar of the invention was prepared from a commercial lithium feldspar by the following method.
B44, a commercial lithium feldspar available from Imerys, was milled in a planetary ball mill (PM 100 Retsch) so as to obtain the required d50 and d95, as measured by laser scattering.
The different obtained lithium feldspars had the following properties as in Table 1.

*Table 1*

| Example | D50 | D95 |
|---------|-----|-----|
| 1-a | 10 | 50 |
| 1-b | 20 | 100 |
| 1-c | 40 | 260 |
| 1-d | 70 | 350 |

Different dry ceramic precursor compositions were prepared as in Table 2.
The following materials were used.
The ball clay is Hycast VC, available from Imerys. The kaolin is Remblend, available from Imerys. The Quartz is Silverbond®, available from Sibelco. The Nepheline syenite is Spectrum N75, available from Sibelco.

*Table 2*

| Ball clay (wt.%) | Kaolin (wt.%) | Quartz (wt.%) | Nepheline syenite (wt.%) | Lithium feldspar (wt.%) |
|---|---|---|---|---|
| 25 | 28.5 | 0 | 21.5 | 25 |

A comparative composition was also prepared, as in Table 3.

*Table 3*

| Ball clay (wt.%) | Kaolin (wt.%) | Quartz (wt.%) | Nepheline syenite (wt.%) | Lithium feldspar (wt.%) |
|---|---|---|---|---|
| 25 | 28.5 | 28.5 | 18 | 0 |

1500 g of dry ceramic precursor composition is obtained by mixing the ingredients mentioned either in Table 2 or in Table 3. Then the ceramic precursor composition is mixed with 340 g water and 3.33g of a defloculant (PC67, available form Zimmer and Schwartz) for 20 minutes with a planetary mixer (available from Hobert) at 5 tr/s.
The quantities of defloculant and water are optimised to obtain a homogeneous slurry with a density (measured with a Pyctometer) of 1.84+/-0.02, a gallemkamp viscosity (To) of 230°+/-20° of and the gallemkamp thixotropy at Imin of 20°+/-5°.

The Gallemkamp thixotropy at Imin is the Gallemcamp viscosity at t=0mn (To) - the Gallemcamp viscosity at t=1mn (Ti).

The slurries are shaped by being casted in a plaster mold (slip casting method).

After 1h30, the shaped ceramic precursor compositions are demolded and put on a metal grid.

The compositions are dried during 12 hours at ambient temperature (25°C), then at 80°C during 8 hours. The residual humidity is maximum at 1 wt.%.

Then the compositions are fired according to the firing cycle as in Figure 2 in Nabatherm' shuttle Kiln. It has to be noted that between 900°C and 1150°C, the heating rate is at 0.5 °C/min. Ceramic articles are obtained.

The properties (Water absorption, Modulus of Rupture, Shrinkage, pyroplasticity, and thermal expansion) of the different ceramic articles were measured.

The obtained results are shown in Figure 4.

Example 2

Example 1 was reproduced with the examplified lithium feldspar 1b of Table 1, but with different amounts of lithium feldspar, as in Table 4.

*Table 4*

|  | Ball clay (wt.%) | Kaolin (wt.%) | Quartz (wt.%) | Nepheline syenite (wt.%) | Lithium feldspar (wt.%) |
|---|---|---|---|---|---|
| 2-a | 25 | 28.5 | 0 | 21.5 | 25 |
| 2-b | 25 | 28.5 | 0 | 11.5 | 35 |
| 2-c | 25 | 28.5 | 0 | 0.5 | 46 |
| Comparative | 25 | 28.5 | 28.5 | 18 | 0 |

The properties (Water absorption, Modulus of Rupture, Shrinkage, pyroplasticity, and thermal expansion) of the different ceramic articles were measured.

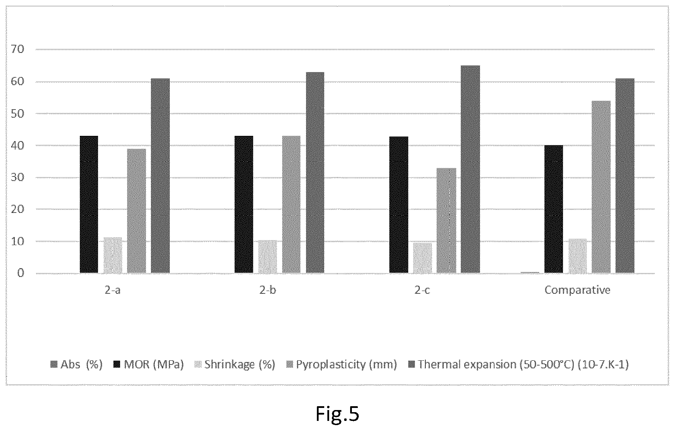

The obtained results are shown in Figure 5.

**Claims**

1. A lithium feldspar having a d50 of about 5 $\mu$m to about 35 $\mu$m, and
comprising from about 0.5 wt.% to about 4.0 wt .% $Li_2O$, based on the total weight of the lithium feldspar.

2. A lithium feldspar according to claim 1, comprising from about 0.5 wt.% to about 3.0 wt .% $Li_2O$, preferably from about 0.8 wt.% to about 2.0 wt .% $Li_2O$, based on the total weight of the lithium feldspar.

3. A lithium feldspar according to claim 1 or 2, having a d95 of about 40 $\mu$m to about 80 $\mu$m.

4. A lithium feldspar according to any claim 1 to 3, wherein the lithium feldspar comprises $Na_2O$ and $K_2O$, optionally wherein the lithium feldspar comprises from about 3 wt.% to about 10 wt.% of the sum of $Na_2O$ and $K_2O$, based on the total weight of the lithium feldspar.

4. Ceramic precursor composition comprising

   ball clay ;
   kaolin; and
   from about 10 to about 50 wt.% of a lithium feldspar according to any claim 1 to 4, based on the total dry weight of the ceramic precursor composition.

5. Composition according to claim 4, wherein the composition further comprises a non lithium feldspar, for example a sodium feldspar, a potassium feldspar, a sodium potassium feldspar, and any mixture thereof, and/or further comprises a feldspathoid mineral, for example nepheline.

**6.** Composition according to any claim 4 or 5, wherein the composition comprises from about 10 to about 40 wt.% of ball clay and/or from about 15 to about 45 wt.% of kaolin, based on the total dry weight of the ceramic precursor composition.

**7.** Composition according to any claim 4 to 6, wherein the composition comprises less than about 20 wt.% quartz, preferably comprises less than about 15 wt.% quartz, based on the total dry weight of the ceramic precursor composition.

**8.** Composition according to any claim 4 to 7, wherein the composition comprises less than 5 wt.% respirable crystalline silica, based on the total dry weight of the ceramic precursor composition.

**9.** Composition according to any claim 4 to 8, wherein the composition comprises $Na_2O$ and $K_2O$, optionally wherein the composition comprises from about 4 wt.% to about 8 wt.% of the sum of Na2O and K2O, based on the total dry weight of the ceramic precursor composition.

**10.** A method of preparing a ceramic, comprising shaping and firing a ceramic precursor composition according to any claim 4 to 9.

**11.** A method according to claim 10, wherein the shaped ceramic precursor composition is fired at a peak firing temperature of about 1050 °C to about 1200 °C.

**12.** A ceramic article made from the ceramic precursor composition according to any claim 4 to 9, or obtainable by a method according to claim 10 or 11.

**13.** A ceramic article according to claim 13, wherein the ceramic has one or more of the following properties:

- a water absorption index of less than 0.5%,
- a pyroplasticity of less than 54 mm ;
- a shrinkage of less than 11%
- a modulus of rupture of at least 40 MPa as determined in accordance with ISO 10545-4:2016 ; and/or
- a thermal expansion at 500°C from $53.10^{-7}.k^{-1}$ to $63.10^{-7}.k^{-1}$.

**14.** A ceramic article according to claim 12 or 13 in the form of a sanitary ware product, for example, a faucet, a water closet, a bath tube or a shower item.

**15.** Use of a lithium feldspar having a d50 of about 5 $\mu$m to about 30 $\mu$m and comprising from 0.5 wt.% to 4.0 wt.% $Li_2O$, based on the total weight of the lithium feldspar in a ceramic precursor composition, for example to lower the firing temperature of the ceramic precursor composition and/or the duration of the firing while improving or maintaining the water absorption index, shrinkage, thermal expension, pyroplasticity and modulus of rupture of the obtained ceramic article in comparison to the same precursor ceramic composition not comprising the lithium feldspar.

Fig.1

Fig.2a

Fig.2b

Fig.3

Fig.4

Fig.5

Europäisches
Patentamt

European
Patent Office

Office européen
des brevets

**EUROPEAN SEARCH REPORT**

Application Number

EP 23 30 6696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TULYAGANOV ET AL: "Influence of lithium oxide as auxiliary flux on the properties of triaxial porcelain bodies", JOURNAL OF THE EUROPEAN CERAMIC SOCIETY, ELSEVIER, AMSTERDAM, NL, vol. 26, no. 7, 1 January 2006 (2006-01-01), pages 1131-1139, XP005277366, ISSN: 0955-2219, DOI: 10.1016/J.JEURCERAMSOC.2005.01.036 * Introduction * * tables 1,2 * * figures 1,2 * * table 5 * * page 1133, columns 1,2; table 3 * * 2. Materials and experimental procedure * | 1-15 | INV. C04B33/13 C01B33/32 |
| X | CN 116 143 507 A (KEDA MFG CO LTD) 23 May 2023 (2023-05-23) * claims 1,5,7,9,10 * * examples 1-9; table 1 * * examples comparative 1-9; table 2 * | 1-15 | TECHNICAL FIELDS SEARCHED (IPC) C04B C01B |

The present search report has been drawn up for all claims

| Place of search | Date of completion of the search | Examiner |
|---|---|---|
| The Hague | 16 March 2024 | Sow, Eve |

EPO FORM 1503 03.82 (P04C01)

## ANNEX TO THE EUROPEAN SEARCH REPORT
## ON EUROPEAN PATENT APPLICATION NO.

EP 23 30 6696

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2024

| Patent document cited in search report | Publication date | Patent family member(s) | Publication date |
|---|---|---|---|
| CN 116143507 A | 23-05-2023 | NONE | |